(19) Europäisches Patentamt
European Patent Office
Office européen des brevets

(11) **EP 2 203 987 B1**

(12) **EUROPEAN PATENT SPECIFICATION**

(45) Date of publication and mention
of the grant of the patent:
**28.11.2018 Bulletin 2018/48**

(51) Int Cl.:
***H04B 7/06*** *(2006.01)*     ***H04B 17/21*** *(2015.01)*

(21) Application number: **08835995.5**

(22) Date of filing: **03.10.2008**

(86) International application number:
**PCT/US2008/078779**

(87) International publication number:
**WO 2009/046318 (09.04.2009 Gazette 2009/15)**

(54) **CALIBRATION AND BEAMFORMING IN A WIRELESS COMMUNICATION SYSTEM**

KALIBRIERUNG UND STRAHLFORMUNG IN EINEM DRAHTLOSEN KOMMUNIKATIONSSYSTEM

CALIBRAGE ET MISE EN FORME DE FAISCEAU DANS UN SYSTÈME DE COMMUNICATION SANS FIL

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.10.2007 US 977359 P**
        **02.10.2008 US 244629**

(43) Date of publication of application:
**07.07.2010 Bulletin 2010/27**

(60) Divisional application:
**16184466.7 / 3 119 011**

(73) Proprietor: **QUALCOMM Incorporated**
**San Diego, CA 92121 (US)**

(72) Inventor: **SARKAR, Sandip**
**San Diego**
**CA 92121 (US)**

(74) Representative: **Heselberger, Johannes**
**Bardehle Pagenberg Partnerschaft mbB**
**Patentanwälte, Rechtsanwälte**
**Prinzregentenplatz 7**
**81675 München (DE)**

(56) References cited:
WO-A-98/27669     US-A1- 2004 048 584
US-A1- 2005 111 599     US-A1- 2006 058 022
US-A1- 2006 098 754     US-A1- 2006 146 725
US-A1- 2007 099 573     US-A1- 2007 099 670

- LOVE D J ET AL: "Multi-mode precoding using linear receivers for limited feedback MIMO systems" COMMUNICATIONS, 2004 IEEE INTERNATIONAL CONFERENCE ON PARIS, FRANCE 20-24 JUNE 2004, PISCATAWAY, NJ, USA,IEEE, vol. 1, 20 June 2004 (2004-06-20), pages 448-452, XP010710386 ISBN: 978-0-7803-8533-7
- BAHRAMI H R ET AL: "Precoder design based on correlation matrices for MIMO systems" COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 3, 16 May 2005 (2005-05-16), pages 2001-2005, XP010826222 ISBN: 978-0-7803-8938-0

**Description**

**BACKGROUND**

**I. Field**

The present disclosure relates generally to communication, and more specifically to transmission techniques in a wireless communication system.

**II. Background**

Wireless communication systems are widely deployed to provide various communication content such as voice, video, packet data, messaging, broadcast, etc. These wireless systems may be multiple-access systems capable of supporting multiple users by sharing the available system resources. Examples of such multiple-access systems include Code Division Multiple Access (CDMA) systems, Time Division Multiple Access (TDMA) systems, Frequency Division Multiple Access (FDMA) systems, Orthogonal FDMA (OFDMA) systems, and Single-Carrier FDMA (SC-FDMA) systems.

A wireless communication system may include a number of Node Bs that can support communication for a number of user equipments (UEs). A Node B may communicate with a UE via the downlink and uplink. The downlink (or forward link) refers to the communication link from the Node B to the UE, and the uplink (or reverse link) refers to the communication link from the UE to the Node B. The Node B may utilize multiple antennas to transmit data to one or more antennas at the UE. It is desirable to transmit data in a manner to achieve good performance.

US 2007/0099670 A1 discloses calibration for a transmit chain of a device transmitting information to multiple devices over wireless links includes selecting from between two or more calibration determination techniques. In certain aspects the techniques include phase only calibration and phase and amplitude calibration.

US 2007/0099573 A1 relates to antenna array calibration for multi-input multi-output wireless communication systems.

US 2004/0048584 A1 relates to techniques for correcting for phase and amplitude offsets in a MIMO radio device. Techniques are provided to correct for phase and amplitude mismatches (also referred to herein as offsets or imbalances) in a device in order to maintain channel symmetry when communicating with another device using MIMO radio communication techniques that depend on channel symmetry. Correction for the amplitude and phase mismatches among the plurality of transmitters and plurality of receivers of a device may be made at baseband using digital logic (such as in the modem) in the receiver path, the transmitter path or both paths of that device. In a device, amplitude and phase offsets are determined among the plurality of radio transmitter and radio receiver paths by measuring phase and amplitude responses when supplying a signal to a transmitter in a first antenna path of the device and coupling the radio signal from a first antenna to a second antenna path of that device where the signal is downconverted by a receiver associated with the second antenna path, and similarly measuring phase and amplitude responses when coupling a signal from the second antenna path to the first antenna path.

Further prior art is disclosed in US 2006/146725 A1, US 2006/058022 A1, US 2005/111599 A1 and WO98/27669 A.

The invention is defined in independent claims 1, 8, 9, 14 and 15.

**SUMMARY**

In another aspect, the Node B may perform beamforming to a UE by taking into account gain imbalance for multiple antennas at the UE. The gain imbalance may be due to variable gains in the receive and/or transmit chains at the UE. In one scenario, the Node B may determine a precoding matrix by taking into account gain imbalance due to different automatic gain control (AGC) gains for receive chains for the multiple antennas at the UE. In another scenario, the Node B may determine the precoding matrix by taking into account gain imbalance due to (i) different power amplifier (PA) gains for transmit chains for the multiple antennas at the UE and/or (ii) different antenna gains for the multiple antennas.

In one design, the Node B may receive at least one gain ratio from the UE, with each gain ratio being determined by a gain for an associated antenna and a gain for a reference antenna at the UE. Each gain may comprise an AGC gain, a PA gain, an antenna gain, etc. The Node B may determine a composite channel matrix based on a channel matrix for the UE and a gain matrix formed with the at least one gain ratio. In another design, the Node B may receive sounding reference signals from the multiple antennas at the UE. Each sounding reference signal may be transmitted by the UE from one antenna at a power level determined based on the gain ratio for that antenna. The Node B may obtain a composite channel matrix based on the sounding reference signals. For both designs, the Node B may determine the precoding matrix based on the composite channel matrix, which may have captured the gain imbalance at the UE.

The Node B may then perform beamforming for the UE with the precoding matrix.

Various aspects and features of the disclosure are described in further detail below.

## BRIEF DESCRIPTION OF THE DRAWINGS

FIG. 1 shows a wireless communication system.
FIG. 2 shows transmit and receive chains at a Node B and a UE.
FIG. 3 shows a Node B and multiple UEs for calibration.
FIG. 4 shows data reception without and with calibration.
FIG. 5 shows a UE with gain imbalance for multiple antennas.
FIG. 6 shows a process for performing calibration by a Node B.
FIG. 7 shows a process for performing calibration in a calibration interval.
FIG. 8 shows an apparatus for performing calibration.
FIG. 9 shows a process for performing beamforming by a Node B.
FIG. 10 shows an apparatus for performing beamforming.
FIG. 11 shows a process for receiving beamformed data by a UE.
FIG. 12 shows an apparatus for receiving beamformed data.
FIG. 13 shows a block diagram of a Node B and a UE.

## DETAILED DESCRIPTION

The techniques described herein may be used for various wireless communication systems such as CDMA, TDMA, FDMA, OFDMA, SC-FDMA and other systems. The terms "system" and "network" are often used interchangeably. A CDMA system may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) is an upcoming release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). cdma2000 and UMB are described in documents from an organization named "3rd Generation Partnership Project 2" (3GPP2). For clarity, certain aspects of the techniques are described below for LTE, and LTE terminology is used in much of the description below.

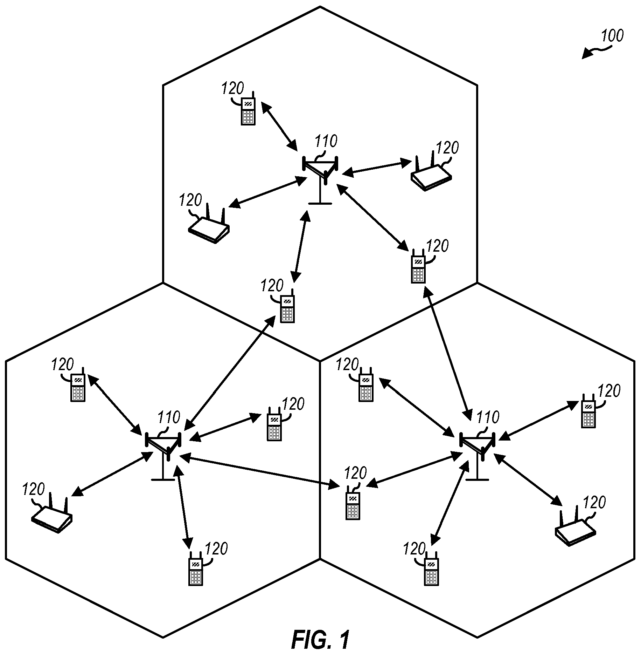

**FIG. 1** shows a wireless communication system 100, which may be an LTE system. System 100 may include a number of Node Bs 110 and other network entities. A Node B may be a fixed station that communicates with the UEs and may also be referred to as an evolved Node B (eNB), a base station, an access point, etc. Each Node B 110 provides communication coverage for a particular geographic area. To improve system capacity, the overall coverage area of a Node B may be partitioned into multiple (e.g., three) smaller areas. Each smaller area may be served by a respective Node B subsystem. In 3GPP, the term "cell" can refer to the smallest coverage area of a Node B and/or a Node B subsystem serving this coverage area.

UEs 120 may be dispersed throughout the system, and each UE may be stationary or mobile. A UE may also be referred to as a mobile station, a terminal, an access terminal, a subscriber unit, a station, etc. A UE may be a cellular phone, a personal digital assistant (PDA), a wireless modem, a wireless communication device, a handheld device, a laptop computer, a cordless phone, etc.

The system may support beamforming for data transmission on the downlink and/or uplink. For clarity, much of the description below is for beamforming on the downlink. Beamforming may be used for a multiple-input single-output (MISO) transmission from multiple transmit antennas at a Node B to a single receive antenna at a UE. Beamforming for a MISO transmission may be expressed as:

$$\mathbf{x} = \mathbf{v}\,\mathbf{s} \;, \qquad\qquad \text{Eq (1)}$$

where $\mathbf{s}$ is a vector of data symbols,
$\mathbf{v}$ is a precoding vector for beamforming, and
$\mathbf{x}$ is a vector of output symbols.

The precoding vector **v** may also be referred to as a beamforming vector, a steering vector, etc. The precoding vector **v** may be derived based on a channel response vector **h** for a MISO channel from the multiple transmit antennas at the Node B to the single receive antenna at the UE. In one design, the precoding vector **v** may be derived based on pseudo eigen-beamforming using the channel response vector h for one column of a channel response matrix. Beamforming may provide higher signal-to-noise-and-interference ratio (SINR), which may support higher data rate.

Beamforming may also be used for a multiple-input multiple-output (MIMO) transmission from multiple transmit antennas at a Node B to multiple receive antennas at a UE. The beamforming may send data on multiple eigenmodes of a MIMO channel formed by the multiple transmit antennas at the Node B and the multiple receive antennas at the UE. A MIMO channel matrix **H** may be diagonalized with singular value decomposition, as follows:

$$\mathbf{H} = \mathbf{U}\,\mathbf{D}\,\mathbf{V} \;, \qquad\qquad\qquad\qquad \text{Eq (2)}$$

where **U** is a unitary matrix of left eigenvectors of **H,**
**V** is a unitary matrix of right eigenvectors of **H,** and
**D** is a diagonal matrix of singular values of **H.**

Beamforming for a MIMO transmission, which may also be referred to as eigen-beamforming, may be expressed as:

$$\mathbf{x} = \mathbf{V}\,\mathbf{s} \;. \qquad\qquad\qquad\qquad \text{Eq (3)}$$

As shown in equation (3), the right eigenvector matrix **V** may be used as a precoding matrix for beamforming. The precoding matrix may also be referred to as a beamforming matrix, a steering matrix, etc. A beamformed transmission may provide noticeable gain over a non-beamformed transmission, especially when the number of layers (or rank) transmitted is less than the number of transmit antennas at the Node B. This may often be the case in asymmetric antenna scenarios, with the number of transmit antennas at the Node B being larger than the number of receive antennas at the UE.

The system may support various reference signals for the downlink and uplink to facilitate beamforming and other functions. A reference signal is a signal generated based on known data and may also be referred to as pilot, preamble, training, sounding, etc. A reference signal may be used by a receiver for various purposes such as channel estimation, coherent demodulation, channel quality measurement, signal strength measurement, etc. Table 1 lists some reference signals that may be transmitted on the downlink and uplink and provides a short description for each reference signal. A cell-specific reference signal may also be referred to as a common pilot, a broadband pilot, etc. A UE-specific reference signal may also be referred to as a dedicated reference signal.

Table 1

| Link | Reference Signal | Description |
|---|---|---|
| Downlink | Cell-specific reference signal | Reference signal sent by a Node B and used by the UEs for channel estimation and channel quality measurement. |
| Downlink | UE-specific reference signal | Reference signal sent by a Node B to a specific UE and used for demodulation of a downlink transmission from the Node B. |
| Uplink | Sounding reference signal | Reference signal sent by a UE and used by a Node B for channel estimation and channel quality measurement. |
| Uplink | Demodulation reference signal | Reference signal sent by a UE and used by a Node B for demodulation of an uplink transmission from the UE. |

The system may utilize time division duplexing (TDD). For TDD, the downlink and uplink share the same frequency spectrum or channel, and downlink and uplink transmissions are sent on the same frequency spectrum. The downlink channel response may thus be correlated with the uplink channel response. A reciprocity principle may allow a downlink channel to be estimated based on transmissions sent via the uplink. These uplink transmissions may be reference signals or uplink control channels (which may be used as reference symbols after demodulation). The uplink transmissions may allow for estimation of a space-selective channel via multiple antennas.

In the TDD system, channel reciprocity may be valid only for a wireless channel, which may also be referred

4

to as a physical propagation channel. There may be noticeable differences between the responses or transfer characteristics of the transmit and receive chains at a Node B and the responses of the transmit and receive chains at a UE. An effective/equivalent channel may be composed of both the transmit and receive chains as well as the wireless channel. The effective channel may not be reciprocal due to differences in the responses of the transmit and receive chains at the Node B and the UE.

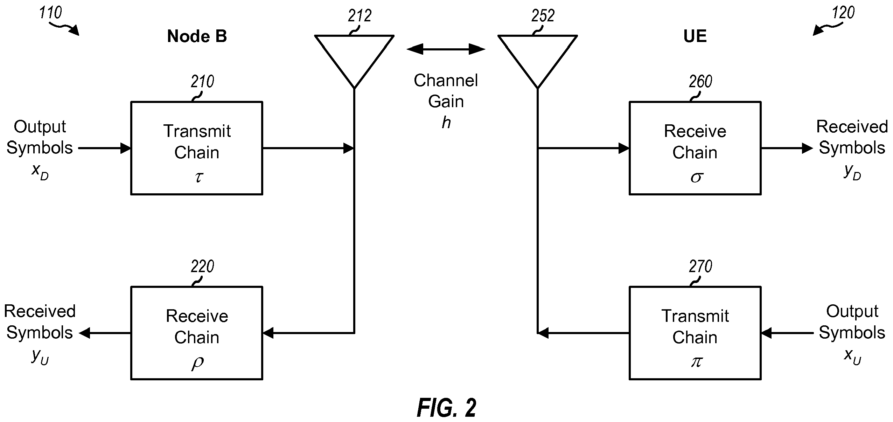

**FIG. 2** shows a block diagram of the transmit and receive chains at a Node B 110 and a UE 120, which may be one of the Node Bs and one of the UEs in FIG. 1. For the downlink, at the Node B, output symbols (denoted as $x_D$) may be processed by a transmit chain 210 and transmitted via an antenna 212 and over a wireless channel having a response of $h$. At the UE, the downlink signal may be received by an antennas 252 and processed by a receive chain 260 to obtain received symbols (denoted as $y_D$). The processing by transmit chain 210 may include digital-to-analog conversion, amplification, filtering, frequency upconversion, etc. The processing by receive chain 260 may include frequency downconversion, amplification, filtering, analog-to-digital conversion, etc.

For the uplink, at the UE, output symbols (denoted as $x_U$) may be processed by a transmit chain 270 and transmitted via antennas 252 and over the wireless channel. At the Node B, the uplink signal may be received by antennas 212 and processed by a receive chain 220 to obtain received symbols (denoted as $y_U$).

For the downlink, the received symbols at the UE may be expressed as:

$$y_D = \sigma \cdot h \cdot \tau \cdot x_D = h_D \cdot x_D \ , \qquad\qquad \text{Eq (4)}$$

where $\tau$ is a complex gain for transmit chain 210 at the Node B,
$\sigma$ is a complex gain for receive chain 260 at the UE, and
$h_D = \sigma \cdot h \cdot \tau$ is an effective downlink channel from the Node B to the UE.

For the uplink, the received symbols at the Node B may be expressed as:

$$y_U = \rho \cdot h \cdot \pi \cdot x_U \ , \qquad\qquad \text{Eq (5)}$$

where $\pi$ is a complex gain for transmit chain 270 at the UE,
$\rho$ is a complex gain for receive chain 220 at the Node B, and
$h_U = \rho \cdot h \cdot \pi$ is an effective uplink channel from the UE to the Node B.

As shown in equations (4) and (5), the wireless channel $h$ may be assumed to be reciprocal for the downlink and uplink. However, the effective uplink channel may not be reciprocal with the effective downlink channel. It is desirable to know the responses of the transmit and receive chains and their influence on the accuracy of the reciprocity assumption for the effective downlink and uplink channels. Furthermore, the Node B and/or the UE may be equipped with an antenna array, and each antenna may have its own transmit/receive chains. The transmit/receive chains for different antennas may have different responses, and antenna array calibration may be performed to account for the different responses.

In general, calibration may be performed to address two kinds of mismatches associated with antenna arrays:

- Mismatches due to physical antenna system/structure - these mismatches include the effects of mutual coupling, tower effects, imperfect knowledge of the antenna locations, amplitude and phase mismatches due to antenna cabling, etc., and

- Mismatches due to hardware elements in the transmit/receive chains for each antenna - these mismatches include analog filters, I and Q imbalance, phase and gain mismatches of low noise amplifier (LNA) in the receive chains and/or power amplifier (PA) in the transmit chains, different non-linearity effects, etc.

Calibration may be performed so that the channel for one link may be estimated by measuring a reference signal sent on the other link. Calibration may also be performed to address uplink antenna switching, which may be employed to obtain uplink transmit diversity when a UE is equipped with two antennas, two receive chains, but only one transmit chain. Uplink antenna switching may be used for time switched transmit diversity (TSTD) or selection transmit diversity (STD). Uplink signals may be sent (i) alternately via the two antennas with TSTD or (ii) via the better antenna with STD. For STD, the UE may send a sounding reference signal (SRS) alternately via the two antennas to allow the Node B to select the better antenna. A radio frequency (RF) switch can support TSTD or STD by connecting a PA output to either one of the two antennas at any given moment.

Beamforming in the TDD system may be supported as follows. UEs operating in a beamformed mode may be configured to send sounding reference signals on the uplink. In symmetric scenarios with reciprocal downlink and uplink, the Node B may derive a precoding matrix to use for beamforming for each UE based on the sounding reference signals received from the UE. Hence, the UEs do not need to send precoding information to the Node B, which may avoid feedback errors. The Node B may send a UE-specific reference signal on the downlink to each UE. The Node B may precode the UE-specific reference signal with the same precoding matrix used for data and may send the precoded reference signal in each resource block used for transmission. A UE may use the precoded reference signal for demodulation and may not need to know the precoding matrix used by the Node B. This may avoid the need to send a precoding matrix indicator (PMI) on the downlink to the UE.

Beamforming may be simplified for symmetric and asymmetric scenarios with reciprocal downlink and uplink. Calibration may be performed to determine a calibration vector that can account for differences in the responses of the transmit and receive chains, so that the downlink channel is reciprocal of the uplink channel.

A calibration procedure may be initiated by a Node B and assisted by a set of UEs. The following description assumes that the transmit and receive chains at the Node B and the UEs have flat responses over a number of consecutive subcarriers per transmit antenna, with the coherence bandwidth being equal to the number of subcarriers assigned to each transmit antenna for sounding. A channel response may thus be obtained based on a reference signal.

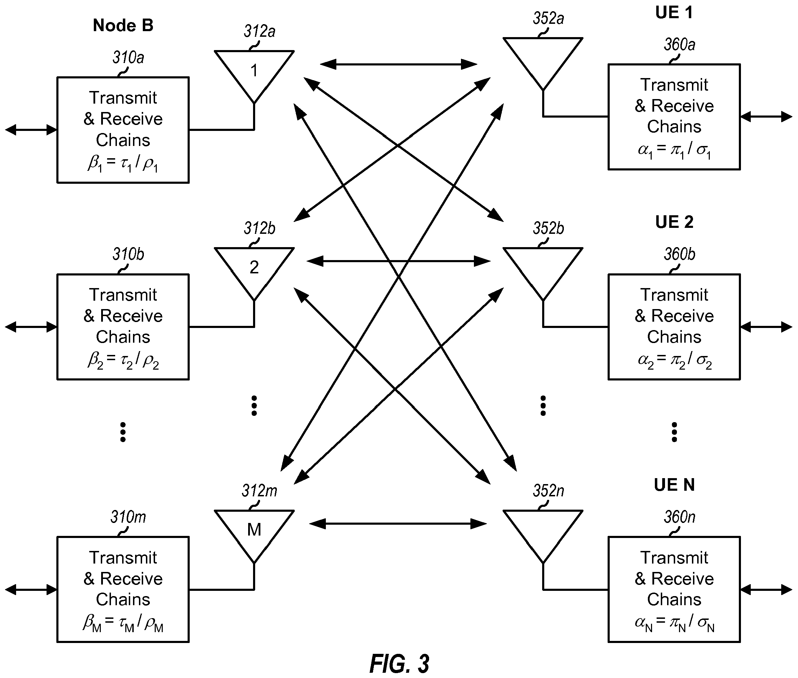

**FIG. 3** shows a block diagram of the Node B and N UEs 1 through N for calibration. The Node B has M transmit/receive chains 310a through 310m for M antennas 312a through 312m, respectively. In general, each UE may have one or more antennas. For calibration purposes, each antenna of a given UE may be considered as a separate UE. In FIG. 3, each UE has transmit/receive chains 360 for one antenna 352.

An effective mismatch $\beta_i$ may be defined for each antenna $i$ at the Node B, as follows:

$$\beta_i = \frac{\tau_i}{\rho_i} \ , \qquad \text{for } i = 1, ..., M \ , \qquad \text{Eq (6)}$$

where $\tau_i$ is a complex gain for the transmit chain for antenna $i$ at the Node B, and
$p_i$ is a complex gain for the receive chain for antenna $i$ at the Node B.

An effective mismatch $\alpha_j$ may be defined for UE $j$, as follows:

$$\alpha_j = \frac{\pi_j}{\sigma_j} \ , \qquad \text{for } j = 1, ..., N \ , \qquad \text{Eq (7)}$$

where $\pi_i$ is a complex gain for the transmit chain for UE $j$, and
$\sigma_i$ is a complex gain for the receive chain for UE $j$.

A downlink channel from Node B antenna $i$ to UE $j$ may be denoted as $h_{ij}^D$. An uplink channel from UE $j$ to Node B antenna $i$ may be denoted as $h_{ji}^U$. By reciprocity of a TDD channel, $h_{ji}^U = h_{ij}^D$ for all values of $i$ and $j$.

The effective mismatches $\beta_1$ through $\beta_M$ for the M Node B antennas may be estimated to calibrate the Node B. It may not be necessary to calibrate the UEs. However, the UEs should properly transmit sounding reference signals for calibration and beamforming, as described below.

An effective downlink channel $h_{ij}^{D,eff}$ from Node B antenna $i$ to UE $j$ may be expressed as:

$$h_{ij}^{D,eff} = \tau_i \cdot h_{ij}^D \cdot \sigma_j \ . \qquad \text{Eq (8)}$$

UE $j$ may estimate the effective downlink channel based on a cell-specific reference signal sent from each Node B antenna on the downlink.

An effective uplink channel $h_{ji}^{U,eff}$ from UE $j$ to Node B antenna $i$ may be expressed as:

$$h_{ji}^{U,eff} = \pi_j \cdot h_{ji}^U \cdot \rho_i \ . \qquad \text{Eq (9)}$$

The Node B may estimate the effective uplink channel based on a sounding reference signal sent by UE $j$ on the uplink.

A calibration factor $c_{ij}$ for Node B antenna $i$ and UE $j$ may be expressed as:

$$c_{ij} = \frac{h_{ij}^{D,eff}}{h_{ji}^{U,eff}} = \frac{\tau_i \cdot h_{ij}^{D} \cdot \sigma_j}{\pi_j \cdot h_{ji}^{U} \cdot \rho_i} = \frac{\beta_i}{\alpha_j} \quad . \qquad\qquad \text{Eq (10)}$$

Equation (10) assumes reciprocity of the wireless channel, so that $h_{ji}^{U} = h_{ij}^{D}$ .

A calibration vector $C_j$ may be obtained for UE $j$, as follows:

$$C_j = [c_{1j} \quad c_{2j} \quad \dots \quad c_{Mj}] = [\beta_1 / \alpha_j \quad \beta_2 / \alpha_j \quad \dots \quad \beta_M / \alpha_j] \quad . \qquad\qquad \text{Eq (11)}$$

The Node B may be calibrated up to a scaling constant. A calibration vector $\tilde{C}_j$ may then be defined as follows:

$$\tilde{C}_j = C_j \cdot \frac{\alpha_j}{\beta_1} = [1 \quad \beta_2 / \beta_1 \quad \dots \quad \beta_M / \beta_1] \quad . \qquad\qquad \text{Eq (12)}$$

As shown in equation (12), elements of the calibration vector $\tilde{C}_j$ are independent of index $j$ even though they are derived based on measurements for UE $j$. This means that the calibration vector applied at the Node B does not need to account for mismatches at the UE. The Node B may obtain N calibration vectors $\tilde{C}_1$ through $\tilde{C}_N$ for the N UEs. The Node B may derive a final calibration vector C as follows:

$$C = f(\tilde{C}_1, \tilde{C}_2, \dots, \tilde{C}_N) \quad , \qquad\qquad \text{Eq (13)}$$

where f () may be a simple averaging function of the N calibration vectors or a function that combines the N calibration vectors using minimum mean square error (MMSE) or some other techniques. If the channel gain $h_{ij}^{D}$ or $h_{ji}^{U}$ is too small, then the calibration may not be accurate due to noise enhancement. An MMSE estimator may be used to better combine N calibration vectors with different noise characteristics.

In one design, calibration may be performed as follows:

1. The Node B decides to perform calibration and selects N UEs with strong channel quality indicators (CQIs) and relatively low Doppler for calibration.
2. The Node B sends messages to the N UEs to enter a calibration mode.
3. Each UE measures the cell-specific reference signal from each Node B antenna to obtain an effective downlink channel estimate for that antenna. The UE may choose the cell-specific reference signal that is closest to the next transmission of the sounding reference signal by the UE, accounting for processing time at the UE.
4. Each UE sends back the effective downlink channel estimate for each Node B antenna using a sufficient number of bits (e.g., 6-bit real/imaginary quantization) and also sends a sounding reference signal at the same time.
5. The Node B measures the sounding reference signal from each UE antenna to obtain an effective uplink channel estimate for the UE antenna and computes the calibration factor $c_{ij}$ for each Node B antenna, as shown in equation (10). The Node B may also obtain $c_{ij}$ with MMSE estimation.
6. The Node B determines the calibration vector $\tilde{C}_j$ for each UE, as shown in equation (12).
7. The Node B computes the calibration vector C for itself based on calibration vectors $\tilde{C}_j$ for all UEs, as shown in equation (13).
8. The Node B exits the calibration mode when satisfied with the calibration.

A UE may also perform calibration to obtain a calibration vector for itself. The UE may perform calibration with one Node B at different times and/or with different Node Bs in order to improve the quality of the calibration vector.

A station (e.g., a Node B or a UE) may obtain a calibration vector by performing calibration and may apply a suitable version of the calibration vector on the transmit side or the receive side. With the calibration vector applied, the channel response for one link may be estimated based on a reference signal received via the other link. For example, a Node B may estimate the downlink channel response based on a sounding reference signal received from a UE on the uplink. The Node B may then perform beamforming based on precoding vector(s) derived from the estimated downlink channel response. The calibration vector should simplify channel estimation and should not adversely impact data transmission performance.

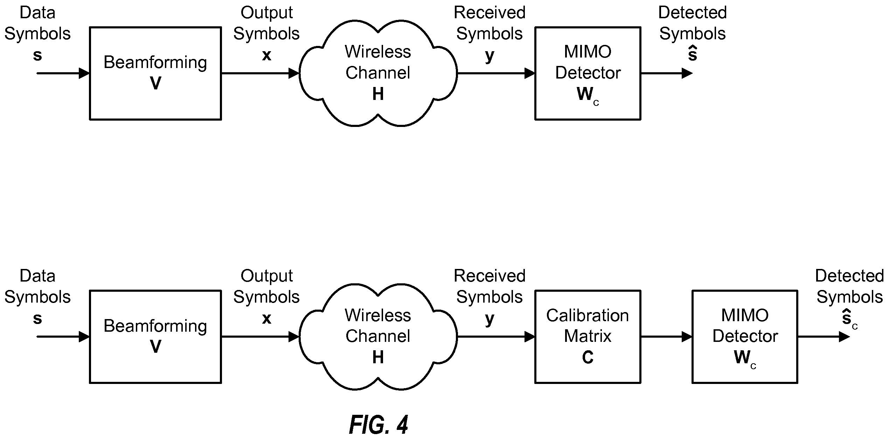

**FIG. 4** shows data transmission with beamforming and data reception with and without calibration. For simplicity, FIG. 4 assumes that a transmitter (e.g., a Node B or a UE) has no transmit/receive mismatches and applies identity/no calibration.

The top half of FIG. 4 shows a receiver (e.g., a UE or a Node B) without calibration. The data symbols from the transmitter are precoded by a beamforming matrix **V** and transmitted via a MIMO channel having a channel matrix **H.** The received symbols at the receiver may be expressed as:

$$\mathbf{y} = \mathbf{H}\,\mathbf{V}\,\mathbf{s} + \mathbf{n} \;,\qquad\qquad \text{Eq (14)}$$

where **s** is a vector of data symbols sent by the transmitter,
**y** is a vector of received symbols at the receiver, and
**n** is a noise vector.

The receiver may perform MIMO detection with a spatial filter matrix **W,** as follows:

$$\hat{\mathbf{s}} = \mathbf{W}\,\mathbf{y} = \mathbf{W}\,\mathbf{H}\,\mathbf{V}\,\mathbf{s} + \mathbf{W}\,\mathbf{n} \;,\qquad\qquad \text{Eq (15)}$$

where $\hat{\mathbf{s}}$ is a vector of detected symbols and is an estimate of s.
The spatial filter matrix **W** may be derived based on MMSE as follows:

$$\mathbf{W} = \mathbf{V}^H\,\mathbf{H}^H\,[\,\mathbf{H}\,\mathbf{H}^H + \Psi\,]^{-1} \;,\qquad\qquad \text{Eq (16)}$$

where $\Psi = E[\,\mathbf{n}\,\mathbf{n}^H\,]$ is a noise covariance matrix at the receiver,
$E[\,]$ denotes an expectation operation, and
"$H$" denotes a conjugate transpose.

The bottom half of FIG. 4 shows a receiver with calibration. The received symbols at the receiver may be as shown in equation (14). The receiver may perform MIMO detection with a spatial filter matrix $\mathbf{W}_c$, as follows:

$$\hat{\mathbf{s}}_c = \mathbf{W}_c\,\mathbf{C}\,\mathbf{y} = \mathbf{W}_c\,\mathbf{C}\,\mathbf{H}\,\mathbf{V}\,\mathbf{s} + \mathbf{W}_c\,\mathbf{C}\,\mathbf{n} \;,\qquad\qquad \text{Eq (17)}$$

where **C** is a calibration matrix at the receiver, and $\hat{\mathbf{s}}_c$ is an estimate of **s.** The calibration matrix **C** is a diagonal matrix, and the diagonal elements of **C** may be equal to the elements of a calibration vector for the receiver.
The spatial filter matrix $\mathbf{W}_c$ may be derived based on MMSE as follows:

$$\mathbf{W}_c = \mathbf{V}^H\,\mathbf{H}^H\,[\,\mathbf{H}\,\mathbf{H}^H + \Psi\,]^{-1}\,\mathbf{C}^{-1} \;.\qquad\qquad \text{Eq (18)}$$

As shown in equations (17) and (18), the MMSE spatial filter matrix $\mathbf{W}_c$ attempts to undo a composite channel $\mathbf{H}_c = \mathbf{CH}$ having a colored noise covariance matrix $\Sigma = \mathbf{C}\,\Psi\,\mathbf{C}^H$. The detected symbols from the receiver with calibration are equal to the detected symbols from the receiver without calibration when an MMSE detector is used at the receiver.
The phases at the received antennas do not affect the performance of a beamformed transmission. However, beamforming should take into account relative transmit powers of different antennas at a UE as well as gain imbalance in the receive chains at the UE.

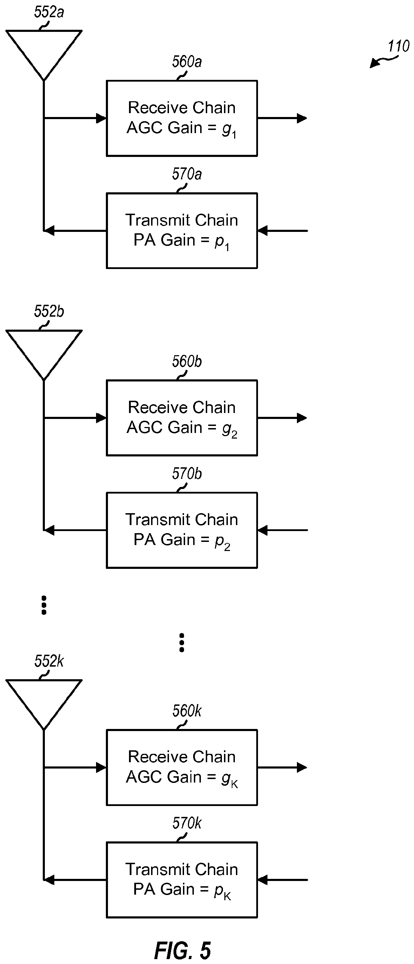

**FIG. 5** shows a block diagram of a UE 110 with K antennas 552a through 552k, where K may be any value greater than one. K receive chains 560a through 560k are coupled to the K antennas 552a through 552k, respectively. K transmit chains 570a through 570k are also coupled to the K antennas 552a through 552k, respectively.
The UE may perform AGC for each receive chain 560 and may adjust the gain for each receive chain such that the noise variances of all K receive chains are approximately equal. The UE may obtain AGC gains of $g_1$ through $g_K$ for the K receive chains 560a through 560k, respectively. The AGC gains may be different for different antennas and may change periodically. The UE may be able to accurately measure the AGC gain for each antenna based on a received signal strength measurement for that antenna.

In one design, the UE may determine a receive gain ratio for each antenna $k$, as follows:

$$r_k = \frac{g_k}{g_1} \, , \qquad \text{for } k = 1, ..., K \, , \qquad \qquad \text{Eq (19)}$$

where $r_k$ is a receive gain ratio for antenna $k$ at the UE.

In one design, the UE may send the receive gain ratios to the Node B, which may take the receive gain ratios into account when performing beamforming. For example, the Node B may determine a composite downlink MIMO channel matrix $\mathbf{H}_D$ as follows:

$$\mathbf{H}_D = \mathbf{R}\,\mathbf{H} \, , \qquad \qquad \text{Eq (20)}$$

where $\mathbf{R}$ is a diagonal matrix containing the K receive gain ratios $r1$ through $r_K$ along the diagonal. The Node B may perform singular value decomposition of the composite downlink MIMO channel matrix $\mathbf{H}_D$ (instead of the downlink MIMO channel matrix $\mathbf{H}$) to obtain the precoding matrix $\mathbf{V}$.

In another design, the UE may apply appropriate gains in the transmit chains when transmitting the sounding reference signals so that the Node B can obtain an estimate of the composite downlink MIMO channel matrix $\mathbf{H}_D$ instead of the downlink MIMO channel matrix $\mathbf{H}$. The UE may scale the gain of the transmit chain for each antenna $k$ by the receive gain ratio $r_k$ for that antenna. For example, if the receive gain ratio for a given antenna is 1.5, then the UE may scale the gain of the transmit chain for that antenna by a factor of 1.5.

As shown in FIG. 5, the UE may have PA gains of $p_1$ through $p_K$ for the K transmit chains 570a through 570k, respectively. The UE may have known gain imbalance in the transmit chains and/or the antennas. For example, one transmit chain may have a smaller PA than another transmit chain. As another example, the gains of two antennas may be different, e.g., due to different types of antenna. The UE may determine a transmit gain ratio for each antenna k, as follows:

$$t_k = \frac{a_k \cdot p_k}{a_1 \cdot p_1} \, , \qquad \text{for } k = 1, ..., K \, , \qquad \qquad \text{Eq (21)}$$

where $a_k$ is an antenna gain for antenna $k$ at the UE,
$p_k$ is a PA gain for the transmit chain for antenna $k$ at the UE, and
$t_k$ is a transmit gain ratio for antenna $k$ at the UE.

The transmit gain ratio $t_k$ is typically equal to 1 but may also be different from 1 when there is gain imbalance in the transmit chains and/or the antennas at the UE.

In one design, the UE may report the known gain imbalance to the Node B, e.g., during a capability discovery phase. The Node B may then take into account the known gain imbalance at the UE when performing calibration and beamforming. For example, the Node B may obtain a composite uplink MIMO channel matrix $\mathbf{H}_U$ from the sounding reference signals received from the UE. This matrix $\mathbf{H}_U$ may be expressed as:

$$\mathbf{H}_U = \mathbf{H}^H\,\mathbf{T} \, , \qquad \qquad \text{Eq (22)}$$

where $\mathbf{T}$ is a diagonal matrix containing the K transmit gain ratios $t_1$ through $t_K$ along the diagonal. The Node B may then remove the matrix $\mathbf{T}$ to obtain the MIMO channel matrix $\mathbf{H}$.

In another design, the UE may apply appropriate gains in the transmit chains when transmitting the sounding reference signals so that the Node B can obtain an estimate of the uplink MIMO channel matrix $\mathbf{H}$ instead of the composite uplink MIMO channel matrix $\mathbf{H}_U$. The UE may scale the gain of the transmit chain for each antenna $k$ by the inverse of the transmit gain ratio $t_k$ for that antenna. For example, if the transmit gain ratio for a given antenna is 2.0, then the UE may scale the gain of the transmit chain for that antenna by a factor of 0.5.

In general, the Node B and/or the UE may account for AGC gain differences between different receive chains, PA gain differences between different transmit chains, and/or antenna gain differences between different antennas at the UE. Transmission of the sounding reference signals at lower power may degrade channel estimation performance. For a small PA, it may not be possible to transmit at higher power due to backoff requirements. In these cases, the UE may send the receive and/or transmit gain ratios to the Node B instead of accounting for them at the UE.

In one design, beamforming may be performed as follows.

1. The Node B calibrates itself as often as necessary (e.g., in each calibration interval of an hour or more) using the calibration procedure described above to obtain a calibration vector for the Node B.

2. For a given UE, the Node B weighs the gain for each UE antenna by the transmit gain ratio $t_k$ for that antenna (if available) to account for known gain imbalance at the UE.

3. The UE applies the receive gain ratios $r_k$ when sending sounding reference signals via its antennas for beamforming feedback. Alternatively, the UE may report the receive gain ratios to the Node B, which may account for these ratios.

4. The Node B uses the calibration vector and possibly the receive and/or transmit gain ratios to perform beamforming to the UE.

The precoding vectors for beamforming may be valid till the next AGC gain change at the UE. The UE may send information indicating gain imbalance in the receive chains, the transmit chains, and/or the antennas at the UE, possibly along with CQI, when the gain imbalance changes.

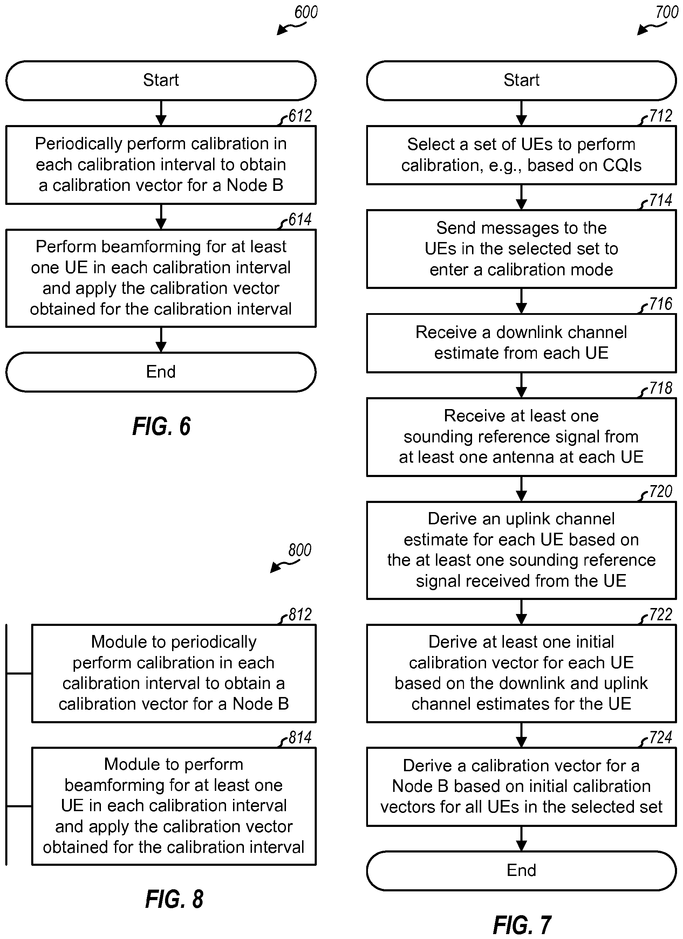

**FIG. 6** shows a design of a process 600 for performing calibration by a Node B. The Node B may periodically perform calibration in each calibration interval to obtain a calibration vector for itself (block 612). A calibration interval may be any suitable duration, e.g., one hour or more. The Node B may perform beamforming for at least one UE in each calibration interval and may apply the calibration vector obtained for that calibration interval (block 614).

**FIG. 7** shows a design of a process 700 for performing calibration in each calibration interval by the Node B. Process 700 may be used for block 612 in FIG. 7. The Node B may select a set of UEs to perform calibration, e.g., based on CQIs received from the UEs (block 712). The Node B may send messages to the UEs in the selected set to enter a calibration mode (block 714). The Node B may receive a downlink channel estimate from each UE (block 716) and may also receive at least one sounding reference signal from at least one antenna at the UE (block 718). The Node B may derive an uplink channel estimate for each UE based on the at least one sounding reference signal received from that UE (block 720). The Node B may derive at least one initial calibration vector for each UE based on the downlink and uplink channel estimates for that UE (block 722). The Node B may then derive a calibration vector for itself based on initial calibration vectors for all UEs in the selected set (block 724).

For each UE, the downlink channel estimate may comprise at least one downlink channel vector for at least one antenna at the UE. The uplink channel estimate may comprise at least one uplink channel vector for the at least one antenna at the UE. Each downlink channel vector may comprise multiple first gains (e.g., $h_{ij}^{D,eff}$) for multiple antennas at the Node B. Each uplink channel vector may comprise multiple second gains (e.g., $h_{ij}^{U,eff}$) for the multiple antennas at the Node B.

An initial calibration vector $\tilde{C}_j$ may be derived for each UE antenna based on the downlink and uplink channel vectors for that UE antenna as follows. Multiple elements (e.g., $c_{ij}$) of an unnormalized calibration vector $C_j$ for UE antenna $j$ may be determined based on ratios of the multiple first gains in the downlink channel vector to the multiple second gains in the uplink channel vector for UE antenna $j$, e.g., as shown in equation (10). The multiple elements of the unnormalized calibration vector may be scaled by the first element to obtain the initial calibration vector $\tilde{C}_j$ for UE antenna $j$, e.g., as shown in equation (12). The calibration vector for the Node B may be derived based on a function of the initial calibration vectors for all UEs in the selected set. The function may be an averaging function, an MMSE function, etc.

**FIG. 8** shows a design of an apparatus 800 for performing calibration. Apparatus 800 includes a module 812 to periodically perform calibration in each calibration interval to obtain a calibration vector for a Node B, and a module 814 to perform beamforming for at least one UE in each calibration interval and apply the calibration vector obtained for the calibration interval.

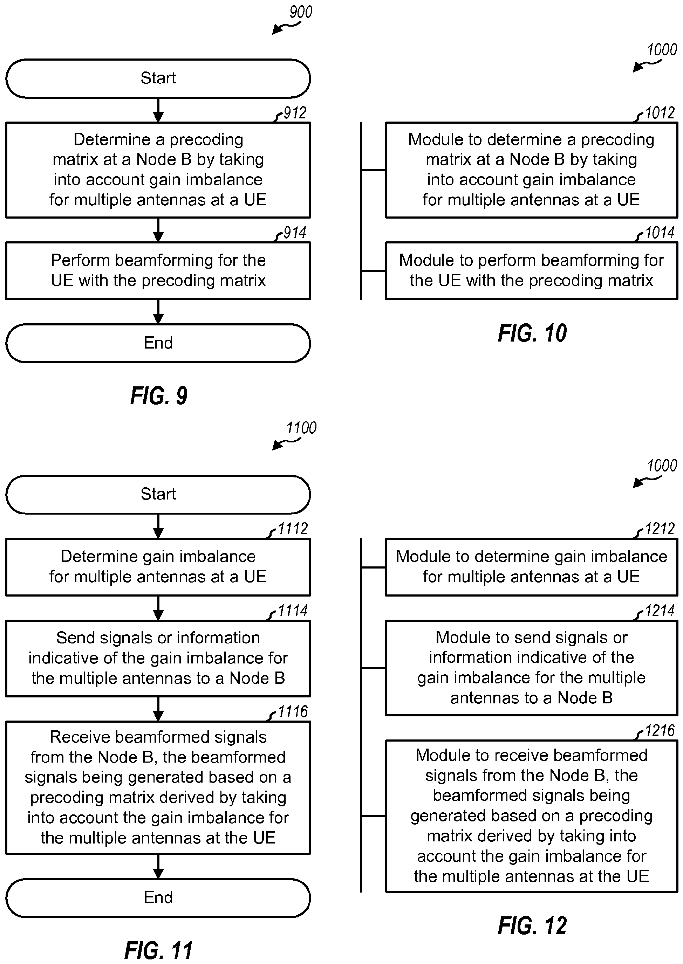

**FIG. 9** shows a design of a process 900 for performing beamforming by a Node B. The Node B may determine a precoding matrix by taking into account gain imbalance for multiple antennas at a UE (block 912). The Node B may perform beamforming for the UE with the precoding matrix (block 914).

In one scenario, the Node B may determine the precoding matrix by taking into account gain imbalance due to different AGC gains for multiple receive chains for the multiple antennas at the UE. In general, an AGC gain may include any variable gain in a receive chain. In one design, the Node B may receive at least one gain ratio $r_k$ from the UE, with each gain ratio being determined by an AGC gain $g_k$ for an associated antenna and an AGC gain $g_1$ for a reference antenna at the UE. The Node B may determine a composite channel matrix $\mathbf{H}_D$ based on a channel matrix $\mathbf{H}$ for the UE and a gain matrix $\mathbf{R}$ formed with the at least one gain ratio. The Node B may then determine the precoding matrix based on the composite channel matrix. In another design, the Node B may receive sounding reference signals from the multiple antennas at the UE. Each sounding reference signal may be transmitted by the UE from one antenna at a power level determined based on the gain ratio $r_k$ for that antenna.

In another scenario, the Node B may determine the precoding matrix by taking into account gain imbalance due to (i) different PA gains for multiple transmit chains for the multiple antennas at the UE and/or (ii) different antenna gains for the multiple antennas. In general, a PA gain may include any variable gain in a transmit chain. In one design, the Node B may receive at least one gain ratio $t_k$ from the UE, with each gain ratio being determined by a PA gain $p_k$ for an associated antenna and a PA gain $p_1$ for a reference antenna at the UE. The Node B may then determine the precoding matrix based on the at least one gain ratio. In another design, the Node B may receive sounding reference signals from the multiple antennas at the UE. Each sounding reference signal may be transmitted by the UE from one antenna at a power level determined based on the gain ratio $t_k$ for that antenna.

FIG. 10 shows a design of an apparatus 1000 for performing beamforming. Apparatus 1000 includes a module 1012 to determine a precoding matrix at a Node B by taking into account gain imbalance for multiple antennas at a UE, and a module 1014 to perform beamforming for the UE with the precoding matrix.

FIG. 11 shows a design of a process 1100 for receiving beamformed data by a UE. The UE may determine gain imbalance for multiple antennas at the UE (block 1112). The UE may send signals or information indicative of the gain imbalance for the multiple antennas to a Node B (block 1114). The UE may thereafter receive beamformed signals from the Node B, with the beamformed signals being generated based on a precoding matrix derived by taking into account the gain imbalance for the multiple antennas at the UE (block 1116).

In one scenario, the UE may determine at least one gain ratio $r_k$ for the multiple antennas at the UE, with each gain ratio being determined by an AGC gain for an associated antenna and an AGC gain for a reference antenna at the UE. In another scenario, the UE may determine at least one gain ratio $t_k$ for the multiple antennas at the UE, with each gain ratio being determined by a PA gain for an associated antenna and a PA gain for the reference antenna at the UE. For both scenarios, in one design, the UE may send the at least one gain ratio to the Node B. In another design, the UE may send sounding reference signals from the multiple antennas at the UE, with each sounding reference signal being sent from one antenna at a power level determined based on the gain ratio for that antenna.

FIG. 12 shows a design of an apparatus 1200 for receiving beamformed data. Apparatus 1200 includes a module 1212 to determine gain imbalance for multiple antennas at a UE, a module 1214 to send signals or information indicative of the gain imbalance for the multiple antennas to a Node B, and a module 1216 to receive beamformed signals from the Node B, with the beamformed signals being generated based on a precoding matrix derived by taking into account the gain imbalance for the multiple antennas at the UE.

The modules in FIGS. 8, 10 and 12 may comprise processors, electronics devices, hardware devices, electronics components, logical circuits, memories, etc., or any combination thereof.

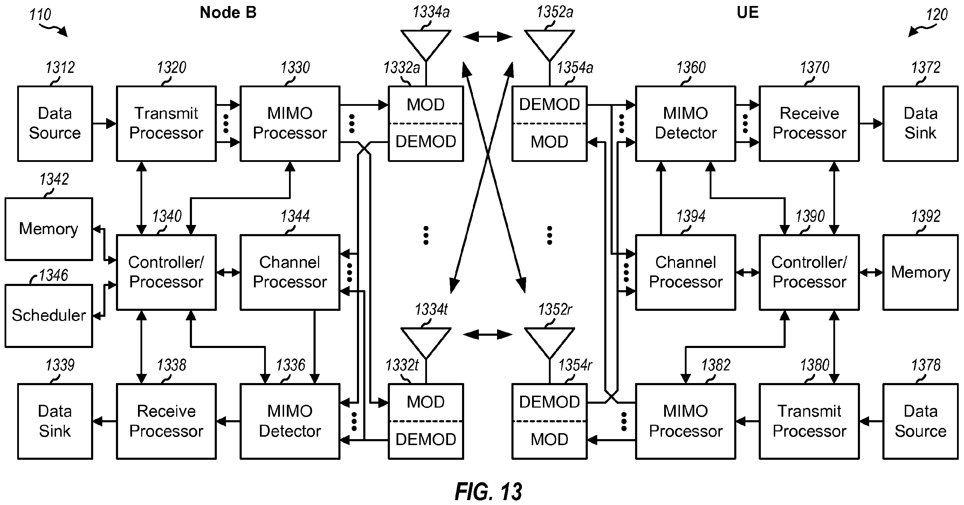

FIG. 13 shows a block diagram of a design of a Node B 110 and a UE 120, which may be one of the Node Bs and one of the UEs in FIG. 1. Node B 110 is equipped with multiple (T) antennas 1334a through 1334t. UE 120 is equipped with one or more (R) antennas 1352a through 1352r.

At Node B 110, a transmit processor 1320 may receive data for one or more UEs from a data source 1312, process (e.g., encode and modulate) the data for each UE based on one or more modulation and coding schemes for that UE, and provide data symbols for all UEs. Transmit processor 1320 may also generate control symbols for control information/signaling. Transmit processor 1320 may further generate reference symbols for one or more reference signals, e.g., cell-specific reference signals. A MIMO processor 1330 may perform precoding for the data symbols, the control symbols, and/or the reference symbols and may provide T output symbol streams to T modulators (MOD) 1332a through 1332t. Each modulator 1332 may process its output symbol stream (e.g., for OFDM) to obtain an output sample stream. Each modulator 1332 may further condition (e.g., convert to analog, filter, amplify, and upconvert) its output sample stream and generate a downlink signal. T downlink signals from modulators 1332a through 1332t may be transmitted via antennas 1334a through 1334t, respectively.

At UE 120, R antennas 1352a through 1352r may receive the T downlink signals from Node B 110, and each antenna 1352 may provide a received signal to an associated demodulator (DEMOD) 1354. Each demodulator 1354 may condition (e.g., filter, amplify, downconvert, and digitize) its received signal to obtain samples and may further process the samples (e.g., for OFDM) to obtain received symbols. Each demodulator 1354 may provide received data symbols and received control symbols to a MIMO detector 1360 and may provide received reference symbols to a channel processor 1394. Channel processor 1394 may estimate the downlink channel from Node B 110 to UE 120 based on the received reference symbols and may provide a downlink channel estimate to MIMO detector 1360. MIMO detector 1360 may perform MIMO detection on the received data symbols and the received control symbols based on the downlink channel estimate and provide detected symbols. A receive processor 1370 may process (e.g., demodulate and decode) the detected symbols, provide decoded data to a data sink 1372, and provide decoded control information to a controller/ processor 1390.

UE 120 may estimate the downlink channel quality and generate CQI and/or other feedback information. The feedback information, data from a data source 1378, and one or more reference signals (e.g., sounding reference signals) may be processed (e.g., encoded and modulated) by a transmit processor 1380, precoded by a MIMO processor 1382, and further processed by modulators 1354a through 1354r to generate R uplink signals, which may be transmitted via antennas 1352a through 1352r. At Node B 110, the R uplink signals from UE 120 may be received by antennas 1334a through 1334t and processed by demodulators 1332a through 1332t. A channel processor 1344 may estimate the uplink channel from UE 120 to Node B 110 and may provide an uplink channel estimate to a MIMO detector 1336. MIMO detector 1336 may perform MIMO detection based on the uplink channel estimate and provide detected symbols. A receive processor 1338 may process the detected symbols, provide decoded data to a data sink 1339, and provide decoded feedback information to a controller/processor 1340. Controller/processor 1340 may control data transmission to UE 120 based on the feedback information.

Controllers/processors 1340 and 1390 may direct the operation at Node B 110 and UE 120, respectively. Controller/processor 1340 at Node B 110 may perform or direct process 600 in FIG. 6, process 700 in FIG. 7, process 900 in FIG. 9 and/or other processes for the techniques described herein. Controller/processor 1390 at UE 120 may perform or direct process 1100 in FIG. 11 and/or other processes for the techniques described herein. Memories 1342 and 1392 may store data and program codes for Node B 110 and UE 120, respectively. A scheduler 1346 may select UE 120 and/or other UEs for data transmission on the downlink and/or uplink based on the feedback information received from the UEs. Scheduler 1346 may also allocate resources to the scheduled UEs.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where *disks* usually reproduce data magnetically, while *discs* reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein but is to be accorded the widest scope consistent with the principles and novel features disclosed herein.

**Claims**

1.  A method for wireless communication, comprising:

    determining (912) a precoding matrix at a Node B by taking into account gain imbalance for multiple antennas at a user equipment, UE, wherein signals or information indicative of the gain imbalance for the multiple antennas are received at the Node B from the UE; and
    performing (914) beamforming for the UE with the precoding matrix.

2.  The method of claim 1, wherein the determining the precoding matrix comprises determining the precoding matrix by taking into account gain imbalance due to different automatic gain control, AGC, gains for multiple receive chains for the multiple antennas at the UE.

3.  The method of claim 2, further comprising:

    receiving at least one gain ratio from the UE, each gain ratio being determined by an AGC gain for an associated antenna and an AGC gain for a reference antenna at the UE,
    and wherein the determining the precoding matrix comprises determining the precoding matrix based on the at least one gain ratio.

4.  The method of claim 3, further comprising:

    determining a composite channel matrix based on a channel matrix for the UE and a gain matrix formed with the at least one gain ratio, and wherein the determining the precoding matrix comprises determining the precoding matrix based on the composite channel matrix.

5.  The method of claim 2, further comprising:

    receiving sounding reference signals from the multiple antennas at the UE, each sounding reference signal being transmitted by the UE from one antenna at a power level determined based on a gain ratio for the antenna, the gain ratio being determined by an AGC gain for the antenna and an AGC gain for a reference antenna at the UE.

6.  The method of claim 1, wherein the determining the precoding matrix comprises determining the precoding matrix by taking into account gain imbalance due to different power amplifier, PA, gains for multiple transmit chains for the multiple antennas at the UE or due to different antenna gains for the multiple antennas.

7.  The method of claim 6, further comprising:

    receiving at least one gain ratio from the UE, each gain ratio being determined by a PA gain for an associated antenna and a PA gain for a reference antenna at the UE, and
    wherein the determining the precoding matrix comprises determining the precoding matrix based on the at least one gain ratio.

8.  An apparatus for wireless communication, comprising:

    at least one processor configured to determine (912) a precoding matrix at a Node B by taking into account gain imbalance for multiple antennas at a user equipment, UE, wherein signals or information indicative of the gain imbalance for the multiple antennas are received at the Node B from the UE, and
    to perform (914) beamforming for the UE with the precoding matrix.

9.  A method for wireless communication, comprising:

    determining (1112) gain imbalance for multiple antennas at a user equipment, UE;
    sending (1114) signals or information indicative of the gain imbalance for the multiple antennas to a Node B; and
    receiving (1116) beamformed signals from the Node B, the beamformed signals being generated based on a precoding matrix derived by taking into account the gain imbalance for the multiple antennas at the UE.

10. The method of claim 9, wherein the determining the gain imbalance for the multiple antennas at the UE comprises determining at least one gain ratio for the multiple antennas at the UE, each gain ratio being determined by an automatic gain control, AGC, gain for an associated antenna and an AGC gain for a reference antenna at the UE.

11. The method of claim 9, wherein the determining the gain imbalance for the multiple antennas at the UE comprises determining at least one gain ratio for the multiple antennas at the UE, each gain ratio being determined by a power amplifier, PA, gain for an associated antenna and a PA gain for a reference antenna at the UE.

12. The method of claim 9, wherein the sending signals or information indicative of the gain imbalance for the multiple antennas comprises sending at least one gain ratio indicative of the gain imbalance for the multiple antennas to the Node B.

13. The method of claim 9, wherein the sending signals or information indicative of the gain imbalance for the multiple antennas comprises sending sounding reference signals from the multiple antennas at the UE, each sounding reference signal being sent from one antenna at a power level determined based on a gain ratio for the antenna.

14. An apparatus for wireless communication, comprising:

    at least one processor configured to determine (1112) gain imbalance for multiple antennas at a user equipment, UE, to send (1114) signals or information indicative of the gain imbalance for the multiple antennas to a Node B, and to receive (1116) beamformed signals from the Node B, the beamformed signals being generated based on a precoding matrix derived by taking into account the gain imbalance for the multiple antennas at the UE.

15. A computer program comprising executable instructions for causing at least one computer to perform a method according to one of the claims 1 to 7 or 9 to 13 when executed.


**Patentansprüche**

1.  Verfahren zum drahtlosen Kommunizieren, aufweisend:

    Ermitteln (912) einer Precoding-Matrix bei einem Node B, indem das Verstärkungsungleichgewicht für mehrere Antennen bei einem Benutzergerät, UE, berücksichtigt wird, wobei Signale oder Informationen, welche für das Verstärkungsungleichgewicht für die mehreren Antennen bezeichnend sind bei dem Node B von dem UE empfangen werden; und
    Durchführen (914) von Beamforming für das UE mit der Precoding-Matrix.

2.  Verfahren nach Anspruch 1, wobei das Ermitteln der Precoding-Matrix das Ermitteln der Precoding-Matrix aufweist, indem das Verstärkungsungleichgewicht aufgrund verschiedener automatic gain control-, AGC-, Verstärkungen für mehrere Empfangsketten für die mehreren Antennen bei dem UE berücksichtigt werden.

3.  Verfahren nach Anspruch 2, weiter aufweisend:

    Empfangen zumindest eines Verstärkungsverhältnisses von dem UE, wobei jedes Verstärkungsverhältnis durch eine AGC-Verstärkung für eine zugehörige Antenne und eine AGC-Verstärkung für eine Referenzantenne bei dem UE ermittelt wird, und wobei das Ermitteln der Precoding-Matrix das Ermitteln der Precoding-Matrix basierend auf dem zumindest einem Verstärkungsverhältnis aufweist.

4.  Verfahren nach Anspruch 3, weiter aufweisend:

    Ermitteln einer zusammengesetzten Kanalmatrix basierend auf einer Kanalmatrix für das UE und einer Verstärkungsmatrix, welche mit zumindest einem Verstärkungsverhältnis gebildet wird, und wobei das Ermitteln der Precoding-Matrix das Ermitteln der Precoding-Matrix basierend auf der zusammengesetzten Kanalmatrix aufweist.

5. Verfahren nach Anspruch 2, weiter aufweisend:

Empfangen eines Sounding-reference-Signals von den mehreren Antennen bei dem UE, wobei jedes Sounding-reference-Signal durch das UE von einer Antenne bei einem Leistungsniveau übertragen wird, welches basierend auf einem Verstärkungsverhältnis für die Antenne ermittelt wird, wobei das Verstärkungsverhältnis durch eine AGC-Verstärkung für die Antenne und eine AGC-Verstärkung für eine Referenzantenne bei dem UE ermittelt wird.

6. Verfahren nach Anspruch 1, wobei das Ermitteln der Precoding-Matrix das Ermitteln der Precoding-Matrix aufweist, indem ein Verstärkungsungleichgewicht aufgrund verschiedener Leistungsverstärker-, PA-, Verstärkungen für mehrere Übertragungsketten für die mehreren Antennen bei dem UE oder aufgrund verschiedener Antennenverstärkungen für die mehreren Antennen berücksichtigt wird.

7. Verfahren nach Anspruch 6, weiter aufweisend:

Empfangen zumindest eines Verstärkungsverhältnisses von dem UE, wobei jedes Verstärkungsverhältnis durch eine PA-Verstärkung für eine zugehörige Antenne und eine PA-Verstärkung für eine Referenzantenne bei dem UE ermittelt wird, und wobei das Ermitteln der Precoding-Matrix Ermitteln der Precoding-Matrix basierend auf dem zumindest einen Verstärkungsverhältnis aufweist.

8. Vorrichtung zum drahtlosen Kommunizieren, aufweisend:

zumindest einen Prozessor, welcher eingerichtet ist, eine Precoding-Matrix bei einem Node B zu ermitteln (912), indem das Verstärkungsungleichgewicht für mehrere Antennen bei einem Benutzergerät, UE, berücksichtigt wird, wobei Signale oder Informationen, welche für das Verstärkungsungleichgewicht für die mehreren Antennen bezeichnend sind bei dem Node B von dem UE empfangen werden; und
für das Durchführen (914) von Beamforming für das UE mit der Precoding-Matrix.

9. Verfahren zum drahtlosen Kommunizieren, aufweisend:

Ermitteln (1112) eines Verstärkungsungleichgewichts für mehrere Antennen bei einem Benutzergerät, UE;
Senden (1114) von Signalen oder Informationen, welche für das Verstärkungsungleichgewicht für die mehreren Antennen bezeichnend sind an einen Node B; und
Empfangen (1116) von beamgeformten Signalen von dem Node B, wobei die beamgeformten Signale erzeugt werden basierend auf einer Precoding-Matrix, welche abgeleitet wird, indem das Verstärkungsungleichgewicht für die mehreren Antennen bei dem UE berücksichtigt werden.

10. Verfahren nach Anspruch 9, wobei das Ermitteln des Verstärkungsungleichgewichts für die mehreren Antennen bei dem UE das Ermitteln zumindest eines Verstärkungsverhältnisses für die mehreren Antennen bei dem UE aufweist, wobei jedes Verstärkungsverhältnis durch eine automatic gain control-, AGC-, Verstärkung für eine zugehörige Antenne und eine AGC-Verstärkung für eine Referenzantenne bei dem UE ermittelt wird.

11. Verfahren nach Anspruch 9, wobei das Ermitteln des Verstärkungsungleichgewichts für die mehreren Antennen bei dem UE das Ermitteln zumindest eines Verstärkungsverhältnisses für die mehreren Antennen bei dem UE aufweist, wobei jedes Verstärkungsverhältnis durch eine Leistungsverstärker-, PA-, Verstärkung für eine zugehörige Antenne und eine PA-Verstärkung für eine Referenzantenne ermittelt wird.

12. Verfahren nach Anspruch 9, wobei das Senden der Signale oder Informationen, welche für das Verstärkungsungleichgewicht der mehreren Antennen bezeichnend sind, das Senden an den Node B zumindest eines Verstärkungsverhältnisses aufweist, welches für das Verstärkungsungleichgewicht für die mehreren Antennen bezeichnend ist.

13. Verfahren nach Anspruch 9, wobei das Senden von Signalen oder Informationen, welche für das Verstärkungsungleichgewicht für die mehreren Antennen bezeichnend sind, das Senden eines Sounding-referenc-Signals von den mehreren Antennen bei dem UE aufweist, wobei jedes Sounding-reference-Signal von einer Antenne bei einem Leistungsniveau gesendet wird, welches ermittelt wird basierend auf einem Leistungsungleichgewicht für die Antenne.

**14.** Vorrichtung zum drahtlosen Kommunizieren, aufweisend:

Zumindest einen Prozessor, welcher eingerichtet ist zum Ermitteln (1112) eines Verstärkungsungleichgewichts für mehrere Antennen bei einem Benutzergerät, UE, zum Senden (1114) von Signalen oder Informationen, welche für das Verstärkungsungleichgewicht für die mehreren Antennen bezeichnend sind an einen Node B, und zum Empfangen (1116) von beamgeformten Signalen von dem Node B, wobei die beamgeformten Signale erzeugt werden basierend auf einer Precoding-Matrix, welche abgeleitet wird, indem das Verstärkungsungleichgewicht für die mehreren Antennen bei dem UE berücksichtigt wird.

**15.** Computerprogramm aufweisend ausführbare Anweisungen, um zumindest einen Computer dazu zu veranlassen, ein Verfahren nach einem der Ansprüche 1 bis 7 oder 9 bis 13 durchzuführen, wenn die Anweisungen ausgeführt werden.

## Revendications

**1.** Procédé de communication sans fil, comprenant :

la détermination (912) d'une matrice de précodage dans un noeud B par une prise en compte d'un déséquilibre de gains pour de multiples antennes au niveau d'un équipement d'utilisateur, UE, dans lequel des signaux ou des informations indiquant le déséquilibre de gains pour les multiples antennes sont reçus dans le noeud B depuis l'UE ; et
la réalisation (914) d'une mise en forme de faisceau pour l'UE avec la matrice de précodage.

**2.** Procédé selon la revendication 1, dans lequel la détermination de la matrice de précodage comprend la détermination de la matrice de précodage par une prise en compte d'un déséquilibre de gains dû à différents gains de commande automatique de gain, AGC, pour de multiples chaînes de réception pour les multiples antennes au niveau de l'UE.

**3.** Procédé selon la revendication 2, comprenant en outre :

la réception d'au moins un rapport de gains depuis l'UE, chaque rapport de gains étant déterminé par un gain d'AGC pour une antenne associée et un gain d'AGC pour une antenne de référence au niveau de l'UE, et dans lequel la détermination de la matrice de précodage comprend la détermination de la matrice de précodage sur la base de l'au moins un rapport de gains.

**4.** Procédé selon la revendication 3, comprenant en outre :

la détermination d'une matrice de canal composite sur la base d'une matrice de canal pour l'UE et d'une matrice de gain formée avec l'au moins un rapport de gains, et dans lequel la détermination de la matrice de précodage comprend la détermination de la matrice de précodage sur la base de la matrice de canal composite.

**5.** Procédé selon la revendication 2, comprenant en outre :

la réception de signaux de référence de sondage depuis les multiples antennes au niveau de l'UE, chaque signal de référence de sondage étant transmis par l'UE depuis une antenne à un niveau de puissance déterminé sur la base d'un rapport de gains pour l'antenne, le rapport de gains étant déterminé par un gain d'AGC pour l'antenne et par un gain d'AGC pour une antenne de référence au niveau de l'UE.

**6.** Procédé selon la revendication 1, dans lequel la détermination de la matrice de précodage comprend la détermination de la matrice de précodage par une prise en compte d'un déséquilibre de gains dû à différents gains d'amplificateur de puissance, PA, pour de multiples chaînes d'émission pour les multiples antennes au niveau de l'UE ou dû à différents gains d'antenne pour les multiples antennes.

**7.** Procédé selon la revendication 6, comprenant en outre :

la réception d'au moins un rapport de gains depuis l'UE, chaque rapport de gains étant déterminé par un gain de PA pour une antenne associée et par un gain de PA pour une antenne de référence au niveau de l'UE, et dans lequel la détermination de la matrice de précodage comprend la détermination de la matrice de précodage sur la base de l'au moins un rapport de gains.

8. Appareil de communication sans fil, comprenant :

au moins un processeur configuré pour déterminer (912) une matrice de précodage dans un noeud B par une prise en compte d'un déséquilibre de gains pour de multiples antennes dans un équipement d'utilisateur, UE, dans lequel des signaux ou des informations indiquant le déséquilibre de gains pour les multiples antennes sont reçus dans le noeud B depuis l'UE, et réaliser (914) une mise en forme de faisceau pour l'UE avec la matrice de précodage.

9. Procédé de communication sans fil, comprenant :

la détermination (1112) d'un déséquilibre de gains pour de multiples antennes dans un équipement d'utilisateur, UE ;
l'envoi (1114) de signaux ou d'informations indiquant le déséquilibre de gains pour les multiples antennes à un noeud B ; et
la réception (1116) de signaux mis en forme de faisceau depuis le noeud B, les signaux mis en forme de faisceau étant générés sur la base d'une matrice de précodage déduite par une prise en compte du déséquilibre de gains pour les multiples antennes au niveau de l'UE.

10. Procédé selon la revendication 9, dans lequel la détermination du déséquilibre de gains pour les multiples antennes au niveau de l'UE comprend la détermination d'au moins un rapport de gains pour les multiples antennes au niveau de l'UE, chaque rapport de gains étant déterminé par un gain de commande automatique de gain, AGC, pour une antenne associée et par un gain d'AGC pour une antenne de référence au niveau de l'UE.

11. Procédé selon la revendication 9, dans lequel la détermination du déséquilibre de gains pour les multiples antennes au niveau de l'UE comprend la détermination d'au moins un rapport de gains pour les multiples antennes au niveau de l'UE, chaque rapport de gains étant déterminé par un gain d'amplificateur de puissance, PA, pour une antenne associée et par un gain de PA pour une antenne de référence au niveau de l'UE.

12. Procédé selon la revendication 9, dans lequel l'envoi de signaux ou d'informations indiquant le déséquilibre de gains pour les multiples antennes comprend l'envoi d'au moins un rapport de gains indiquant le déséquilibre de gains pour les multiples antennes au noeud B.

13. Procédé selon la revendication 9, dans lequel l'envoi de signaux ou d'informations indiquant le déséquilibre de gains pour les multiples antennes comprend l'envoi de signaux de référence de sondage depuis les multiples antennes au niveau de l'UE, chaque signal de référence de sondage étant envoyé depuis une antenne à un niveau de puissance déterminé sur la base d'un rapport de gains pour l'antenne.

14. Appareil de communication sans fil, comprenant :

au moins un processeur configuré pour déterminer (1112) un déséquilibre de gains pour de multiples antennes au niveau d'un équipement d'utilisateur, UE, pour envoyer (1114) des signaux ou des informations indiquant le déséquilibre de gains pour les multiples antennes à un noeud B, et pour recevoir (1116) des signaux mis en forme de faisceau depuis le noeud B, les signaux mis en forme de faisceau étant générés sur la base d'une matrice de précodage déduite par une prise en compte du déséquilibre de gains pour les multiples antennes au niveau de l'UE.

15. Programme d'ordinateur comprenant des instructions exécutables pour amener au moins un ordinateur à réaliser un procédé selon l'une quelconque des revendications 1 à 7 ou 9 à 13 lorsqu'elles sont exécutées.

**FIG. 1**

**FIG. 2**

**Node B**

**UE 1**

*310a*
Transmit & Receive Chains
$\beta_1 = \tau_1 / \rho_1$

*312a*
1

*352a*

*360a*
Transmit & Receive Chains
$\alpha_1 = \pi_1 / \sigma_1$

*310b*
Transmit & Receive Chains
$\beta_2 = \tau_2 / \rho_2$

*312b*
2

**UE 2**

*352b*

*360b*
Transmit & Receive Chains
$\alpha_2 = \pi_2 / \sigma_2$

*310m*
Transmit & Receive Chains
$\beta_M = \tau_M / \rho_M$

*312m*
M

**UE N**

*352n*

*360n*
Transmit & Receive Chains
$\alpha_N = \pi_N / \sigma_N$

*FIG. 3*

EP 2 203 987 B1

FIG. 4

FIG. 5

600

Start

*612*

Periodically perform calibration in each calibration interval to obtain a calibration vector for a Node B

*614*

Perform beamforming for at least one UE in each calibration interval and apply the calibration vector obtained for the calibration interval

End

*FIG. 6*

800

*812*

Module to periodically perform calibration in each calibration interval to obtain a calibration vector for a Node B

*814*

Module to perform beamforming for at least one UE in each calibration interval and apply the calibration vector obtained for the calibration interval

*FIG. 8*

700

Start

*712*

Select a set of UEs to perform calibration, e.g., based on CQIs

*714*

Send messages to the UEs in the selected set to enter a calibration mode

*716*

Receive a downlink channel estimate from each UE

*718*

Receive at least one sounding reference signal from at least one antenna at each UE

*720*

Derive an uplink channel estimate for each UE based on the at least one sounding reference signal received from the UE

*722*

Derive at least one initial calibration vector for each UE based on the downlink and uplink channel estimates for the UE

*724*

Derive a calibration vector for a Node B based on initial calibration vectors for all UEs in the selected set

End

*FIG. 7*

*900*

Start

*912*

Determine a precoding matrix at a Node B by taking into account gain imbalance for multiple antennas at a UE

*914*

Perform beamforming for the UE with the precoding matrix

End

**FIG. 9**

*1000*

*1012*

Module to determine a precoding matrix at a Node B by taking into account gain imbalance for multiple antennas at a UE

*1014*

Module to perform beamforming for the UE with the precoding matrix

**FIG. 10**

*1100*

Start

*1112*

Determine gain imbalance for multiple antennas at a UE

*1114*

Send signals or information indicative of the gain imbalance for the multiple antennas to a Node B

*1116*

Receive beamformed signals from the Node B, the beamformed signals being generated based on a precoding matrix derived by taking into account the gain imbalance for the multiple antennas at the UE

End

**FIG. 11**

*1000*

*1212*

Module to determine gain imbalance for multiple antennas at a UE

*1214*

Module to send signals or information indicative of the gain imbalance for the multiple antennas to a Node B

*1216*

Module to receive beamformed signals from the Node B, the beamformed signals being generated based on a precoding matrix derived by taking into account the gain imbalance for the multiple antennas at the UE

**FIG. 12**

**Node B**  110

**UE**  120

1334a  1352a

| 1312 | 1320 | 1330 | 1332a | 1354a | 1360 | 1370 | 1372 |

Data Source  →  Transmit Processor  →  MIMO Processor  →  MOD / DEMOD  ···  DEMOD / MOD  →  MIMO Detector  →  Receive Processor  →  Data Sink

1342 Memory

1340 Controller/ Processor

1344 Channel Processor

1394 Channel Processor

1390 Controller/ Processor

1392 Memory

1346 Scheduler

1334t  1352r

1339 Data Sink  ←  1338 Receive Processor  ←  1336 MIMO Detector  ←  1332t MOD / DEMOD  ···  1354r DEMOD / MOD  ←  1382 MIMO Processor  ←  1380 Transmit Processor  ←  1378 Data Source

**FIG. 13**

**EP 2 203 987 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070099670 A1
- US 20070099573 A1
- US 20040048584 A1
- US 2006146725 A1
- US 2006058022 A1
- US 2005111599 A1
- WO 9827669 A